# EUROPEAN PATENT APPLICATION

(11) **EP 3 391 762 A1**
(43) Date of publication of application: **24.10.2018**
(21) Application number: 17167108.4
(22) Date of filing: 19.04.2017
(51) Int. Cl.: A41D 1/00, D06F 93/00

(54) **DETERMINING WEARING OF CLOTH AND FURTHER DETERMINING OPTIMAL WASHING TIME FOR CLOTH**

(71) Applicant: Vestel Elektronik Sanayi ve Ticaret A.S., 45030 Manisa (TR)
(72) Inventor: ÖCAL, Ömür, 45030 Manisa (TR)
(74) Representative: Ascherl, Andreas

(57) **Abstract**

System (1) for determining wearing of an item of cloth which includes at least one temperature sensor (2) adapted to produce a temperature value (3) of an environment where the cloth is placed, at least one vibration sensor (4) adapted to produce a vibration related value (5) of an environment where the cloth is placed, and a processor (6) adapted to receive and process the temperature value (3) and the vibration related value (5), and to determine if the cloth is worn or not, the invention concerns as well a second system (9) for determining the optimal time for washing the cloth which includes said first system (1), whereby said second system (9) includes a lookup table (10) comprising a threshold value (11) of the time frame for the items of cloth to be washed after being worn based on the category of the clothes, and a controller (12) adapted to receive the information concerning said time frame (7) and said category (13) and to retrieve the threshold value (11) from the lookup table (10), to compare the time frame (7) and the threshold value (11), and to determine that the item of cloth should be washed.

## Description

This invention refers to a first system for determining wearing of a cloth according to claim 1, a second system for determining optimal washing time of a cloth according to claim 5, and a method for determining optimal washing time of a cloth according to claim 8.

### Background of the Invention

Generally, user of a cloth washes the cloth randomly based on his perception of the cloth being unclean or according to timeframe of wearing the cloth. Usually, such random washing of clothes, leads to the clothes getting quickly deformed. Also, it may happen that due to his perception, the user of cloth may keep on wearing the cloth without washing for longer time frame, as it may not appear unclean to him, however the cloth may be non-sterile and which leads user to wearing non-sterile clothes for a longer period, which may result into infection and other health related issues to the user of the clothes, and people in his surrounding environment.

There are some rules for increasing life of clothes. One of these rules is to control frequency of washing of the clothes. This means that each clothes must be washed at a certain usages.

One way to identify usage of the cloth is disclosed in US Patent Application US 4886010, which discloses a garment wear monitor for recording the number of times an article of clothing is worn. The monitor is removably or permanently affixed to a clothing hanger, or is removably affixed to the garment directly. Each time the garment is worn the garment wear monitor is advanced by one number manually or automatically. The garment wear monitor may also display the date on which the garment was last cleaned. A threshold indicator serves to remind the user to have the garment cleaned when a predetermined number of wearings have taken place. The garment wear monitor may display the number of wearings and the date of last cleaning by a mechanically movable scale or by an electronic digital display. However, such garment wear monitor have shortcomings if manually used, as it is human tendency to be forgetful, and hence the human may tend to forget to advance the monitor. Even if, automatically used, the estimation of wearing of cloth is simply based on if the cloth is picked from a predetermined place, which is again error prone, as everytime the cloth is picked up, it may not be worn by a person.

### Object of the Invention

It is therefore the object of the present invention is to provide a mechanism for accurately determine wearing of cloth by human, and further determining optimal washing time for the cloth.

### Description of the Invention

The before mentioned object is solved by a first system of the Claim 1.

A first system for determining wearing of a cloth comprising at least one temperature sensor for producing a temperature value of an environment where the cloth is placed, at least one vibration sensor for producing a vibration related value of an environment where the cloth is placed, and a processor which receives and processes the temperature value and the vibration related value, and to determine if the cloth is worn or not.

This provides an accurate identification of wearing of the cloth, as the temperature difference when the cloth is worn, and when it is not, and further vibration parameters when the cloth is worn, and when it is not, shall accurately determine whether the cloth is worn or not, and further reduce substantially any false positive regarding wearing of the cloth.

Further preferred embodiments are subject-matter of dependent claims and/or of the following specification parts.

According to a preferred embodiment of the first system, wherein the processor is adapted to receive the temperature value and the vibration related value at a time interval, and based on the value received, the processor is adapted to estimate a time frame for which the cloth is worn.

This embodiment is beneficial as it estimates a time period for which the cloth was worn. This shall provide a better indication about the cloth having being soiled or non-sterile.

According to another embodiment of the first system, the first system includes a memory, which receives and stores the time frame.

This embodiment is helpful, as it allows saving of the time frame of wearing of cloth for future retrieval.

According to a further preferred embodiment of the first system, wherein the processor receives the stored time frame from the memory, and increases the time frame with a new time frame for which cloth is worn, and sends the increased time frame to the memory for storing.

This embodiment is beneficial, as it facilitates keeping a tap on the time frame the cloth has been worn in totality, and further retriving of the time frame whenever is required.

The before mentioned object is also solved by a second system of claim 5. The second system for determining optimal time for washing the cloth includes the first system according to any of the claims 2 to 4. The second system further includes a lookup table having a threshold value of the time frame for clothes to be washed after being worn based on category of clothes, and a controller which receives the time frame, receives a category of the cloth, and retrieves a threshold value from the lookup table, to compare the time frame and the threshold value, and determines requirement of the cloth to be washed.

This embodiment helps in determining accurately when the clothes should be washed after being worn for a time period when the clothes gets non-sterile.

According to a further preferred embodiment of the second system, wherein the controller generates an alarm signal based on the determination of the washing of the cloth, the second system further includes an alarming device which is receives the alarm signal, and accordingly raises an alarm.

This embodiment helps to provide a mechanism to notify a user of the cloth or any responsible person for washing of the cloth regarding the time to keep the cloth for wash.

According to a further preferred embodiment of the second system, wherein the controller is generates an alarm signal based on the determination of the washing of the cloth, the second system further includes a computing device having a processing module which is adapted to execute a piece of code, and on execution, the processing module receives the alarm signal, processes the alarm signal, and renders an indication for washing of the cloth onto a display of the computing device.

This embodiment helps to provide a mechanism to notify a user of the cloth, or any responsible person for washing of the cloth, regarding the time to keep the cloth for wash, even if the person is not in proximity to the cloth.

The before mentioned object is also solved by a method of claim 8 which determines optimal time for washing a cloth. The method includes steps of:
- placing at least one temperature sensor onto a cloth, and producing a temperature value of an environment where the cloth is placed,
- placing at least one vibration sensor onto a cloth and producing a vibration related value of an environment where the cloth is placed,
- processing the temperature value and the vibration related value using a processor, and identifying if the cloth is worn or not.

According to a further preferred embodiment of the method, the method further includes step of receiving the temperature value and the vibration related value by the processor at a time interval, and based on the value received, estimating a time frame for which the cloth is worn.

According to another embodiment of the method, the method further includes step of:
- receiving and storing the time frame in a memory;
- receiving the stored time frame from the memory by the processor, increasing the time frame with a new time frame for which cloth is worn by the processor, and sending the increased time frame to the memory for storing.

According to a further preferred embodiment of the method, the method further includes step of:
- receiving the timeframe by a controller from the memory;
- receiving a category of the cloth by the controller, and to retrieve a threshold value from a lookup table by the controller, wherein the lookup table comprising a threshold value for clothes to be worn before washing based on category of clothes;
- comparing the time frame and the threshold value by the controller, and determining, requirement of the cloth to be washed.

According to another embodiment of the method, the method further includes step of:
- generating an alarm signal by the controller on the determination of the washing of the cloth;
- receiving of the alarm signal by an alarming device, and accordingly raise an alarm.

According to a further preferred embodiment of the method, the method further includes step of:
- generating an alarm signal by the controller on the determination of the washing of the cloth;
- executing a piece of code onto a processing module of a computing device;
- on execution, processing the alarm signal by the processing module, and rendering an indication for washing of the cloth onto a display of the computing device.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

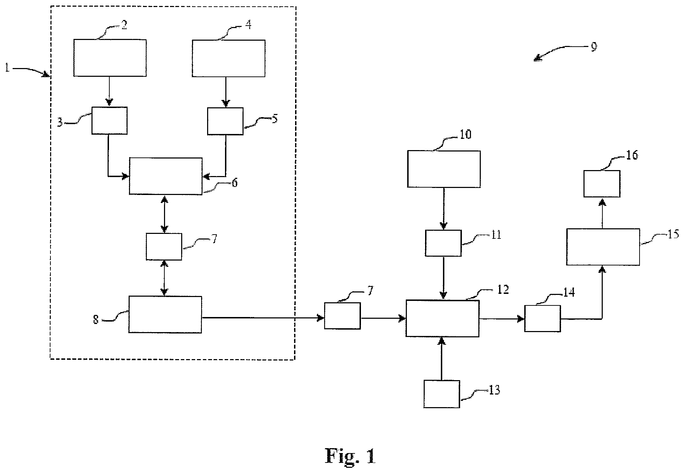

Fig. 1 shows a schematic representation of a first system for determining wearing of the cloth included as part of a second system for determining optimal time frame of washing of the cloth.

### Detailed Description of the Drawings

Fig. 1 shows a first system 1 for determining wearing of the cloth according to the invention. The first system 1 includes a temperature sensor 2, a vibration sensor 4, a processor 6, and a memory.

The temperature sensor 2 senses a temperature of an environment in which the temperature sensor 2 is placed and produces a temperature value 3 corresponding to the particular temperature. The temperature sensor 2 is placed along with the cloth, such that when the cloth is placed in a cupboard or in any other part of the room, it captures the room temperature, as that shall be environment for the temperature sensor 2. Once the cloth is worn by a human, the environment of the temperature sensor 2 changes, and accordingly it produces a temperature value 3 corresponding to body temperature of the human.

The vibration sensor 4 sensor senses a vibration related value 5 of an environment in which the vibration sensor 4 is placed. For example, if the cloth is placed in a closet or in a room, in most cases there shall be almost no vibrations received, and hence the vibration sensor shall not produce any vibration related value 5. However, once the cloth is worn by a human, the vibration sensor captures human body vibrations and produces the vibration related value 5. In one embodiment, the vibration sensor 4 also captures displacement, acceleration and other such related parameters if the human is moving, and accordingly produces vibration related value 5.

The processor 6 receives the temperature value 3 and the vibration related value 5, processes the values 3, 5 and determines whether the cloth was worn or not.

In one embodiment, more than one temperature sensors 2, or more than one vibration sensors 4 shall be provided in the first system 1, which shall be placed on cloth, and provides more values 3, 5, which shall help to provide further accuracy in determining wearing of the cloth.

Individually, if the sensors 2, 4, were taken for determining wearing of the cloth, there shall be possibility for false positives, like in scenario, where the body temperature and room temperature were equivalent; there shall be no visible change in the temperature, and the processor shall be either pointing for wearing of cloth, even when the cloth is kept in the closet, or shall not be indicating towards wearing of the cloth when the cloth is worn by a human. Similarly, when the vibration sensor is taken alone, even vibration due to any sound or any external body like washing machine or grinder could provide a vibration related value 5, which shall be again false positive for wearing of cloth, if vibration related value 5 is taken alone.

Hence, the processing of both the values 3, 5 together reduces false positive, and provides for more accurate determination of wearing of the cloth.

The processor 6 may further use rules to reduce false positives, by considering range of temperature value 3, or range of vibration related value 5, or time period for regularly receiving of the values 3, 5 with no deviation or minimal deviation in the values 3, 5, or a pattern in deviation of the values 3, 5, or combination thereof.

The processor 6 receives the values 3, 5 at time intervals, whether regular or irregular, and based on the values 3, 5 received at various time intervals determines a time frame 7 for which the cloth was worn by the human. When there is a substantial shift in values 3, 5 in two consecutive time intervals, it's an indication of either wearing of cloth or taking off of the cloth. Hence, difference between two time intervals where wearing and taking off of the cloth is identified is the time frame for which the cloth was worn.

In an alternate embodiment, the time frame 7 of wearing of the cloth need not be identified, rather just wearing of the cloth is determined, and further such determination of wearing of the cloth can be further used alone to point number of times the cloth is worn, and which can further be helpful to determine, if the cloth should be washed or not.

Once the time frame 7 of wearing of cloth is determined, the time frame 7 is sent to a memory and saved in it. The time frame 7 can further be retrieved from the memory for future usage. In an alternate embodiment, the memory device 8 is not required, where the time frame 8 need not be retrieved. One scenario, for which the retrieval of time frame 7 shall be significant, is, when the time frame 7 shall be used for analyzing user behavior of the human wearing the cloth in relation to wearing of the cloth.

In one embodiment, the processor 6 also identifies timings of wearing of a particular cloth, which can help to determine usage pattern of a particular cloth by a human. This pattern identification can be helpful for various marketing products for cloth.

The processor 6 is receives the stored time frame 7 from the memory 8, and increases the time frame 7 with a new time frame 7 for which cloth is worn, and send the increased time frame 7 to the memory 8 for storing. This can help to keep on increasing the time frame 7 in total for which the cloth is worn before being washed. Once, the cloth is washed, the time frame can be reset to zero, so that to begin determining the time frame 7 from when the cloth is first worn. In an alternate embodiment, increment of time frame 7 need not be done, rather each time a new value of the time frame 7 can be stored separately for the cloth in the memory 8, and further these values of the time frame 7 can be retrieved later on to estimate the total time frame 7 for which the cloth was worn.

In one embodiment, the time frame 7 need not be set to zero, rather the memory 8 keeps on storing time frame 7 separately each time the cloth is washed.

Fig. 1 also shows a second system 9 which includes the first system 1. The second system 9 further includes a controller 12, a look up table 10, and a alarming device 15.

The lookup table 10 includes a threshold value 11 of the time frame for clothes to be washed after being worn based on category of clothes. The threshold values 11 can be determined as number of times the cloth is worn or for a time period (number of minutes, or hours, etc.) for which the clothes are worn, after which the clothes from a particular category should be washed. However, the threshold values 11 shall be synchronous to the time frame 7, i.e., if the time frame 7 is indicating of number of times the cloth is worn, than accordingly the threshold value 11 shall also represent number of times the clothes are worn, and if the time frame 7 is indicating a time period for which the cloth is worn than the threshold value 11 shall also be indicating the time period for which the cloth is worn. In an alternate embodiment, if the threshold value 11 and the time frame 7 are indicating differently, i.e., one is referring to the time period of wearing of clothes and another is referring to number of times of wearing of the clothes, than firstly a normalization is done to either convert number of times to time period or, vice-versa for further processing. Normalization can be done on certain rules, which define conversion between the time periods to number of times of wearing of clothes.

The controller 12 receives the time frame 7, receives a category 13 of the cloth, and retrieves the threshold value 11 from the lookup table 10, compares the time frame 7 and the threshold value 11, and determines requirement of the cloth to be washed. The controller 12 further generates an alarm signal 14 based on the determination of the washing of the cloth. The second system 9 further includes an alarming device 15, which receives the alarm signal 14, and accordingly raises an alarm 16. In an alternate embodiment, the alarm is not required to be raised rather simple notification on a display is made for washing of the cloth.

The threshold value 11 can also be in a range, where starting of range and ending of range can be used as warning period for wearing of the cloth before washing, and time frame 7 beyond this range shall be considered a non-compliance period, and accordingly the alarm can be divided into two categories, first one which shall represent warning, and second which represent non-compliance. In case, the time frame 7 is in non-compliance period, a situation can be escalated to mitigated non-compliance. Such escalated situation can be, triggering an alarm to a third person who may have second level responsibility for maintenance and cleanliness of the cloth, or automatically ordering laundry for particular cloth for which the time frame 7 is in non-compliance period, etc.. This escalation can be made using various available networks like the internet, mobile network, local network, etc.

In one embodiment, the alarm signal 14 shall be sent to a computing device 15, which is connected to the controller over a network such as internet, mobile network, or any local area network, etc. The computing device 15 can be a desktop, mobile phone, PDA, etc. The computing device 15 has a processing module which executes a piece of code, and on execution, the processing module receives the alarm signal 14, processes the alarm signal 14, and renders an indication 16 for washing of the cloth onto a display of the computing device 15.

In one embodiment, the sensors 2, 4, processor 6, and/or controller 12 can be part of a single device, which can be placed on cloth. In such case, to power the electrical components, a powering module shall also be provided as part of the device, so that to provide power for functioning of the electrical components. The device may include the lookup table 10, and the alarming device 15 too.

Thus, the present invention refers to a first system 1 for determining wearing of a cloth and a second system 9 for determining optimal time for washing the cloth. The first system includes at least one temperature sensor 2 adapted to produce a temperature value 3 of an environment where the cloth is placed, at least one vibration sensor 4 adapted to produce a vibration related value 5 of an environment where the cloth is placed, and a processor 6 adapted to receive and process the temperature value 3 and the vibration related value 5, and to determine if the cloth is worn or not. In one embodiment of the first system, wherein the processor 6 is adapted to receive the temperature value 3 and the vibration related value 5 at a time interval, and based on the values 3, 5 received, the processor 6 is adapted to estimate a time frame 7 for which the cloth is worn. The second system 9 includes the first system 1. The second system 9 further includes a lookup table 10 comprising a threshold value 11 of the time frame for clothes to be washed after being worn based on category of clothes, and a controller 12 adapted to receive the time frame 7, to receive a category 13 of the cloth, and to retrieve the threshold value 11 from the lookup table 10, to compare the time frame 7 and the threshold value 11, and to determine requirement of the cloth to be washed.

### List of reference numbers

- 1: first system
- 2: temperature sensor
- 3: temperature value
- 4: vibration sensor
- 5: vibration related value
- 6: processor
- 7: time frame
- 8: memory
- 9: second system
- 10: lookup table
- 11: threshold value
- 12: controller
- 13: category of the cloth
- 14: alarm signal
- 15: alarming device/ computing device
- 16: alarm/ indication for washing of the cloth

## Claims

1. A first system (1) for determining wearing of a cloth comprising:
- at least one temperature sensor (2) adapted to produce a temperature value (3) of an environment where the cloth is placed;
- at least one vibration sensor (4) adapted to produce a vibration related value (5) of an environment where the cloth is placed; and
- a processor (6) adapted to receive and process the temperature value (3) and the vibration related value (5), and to determine if the cloth is worn or not.

2. The first system (1) according to claim 1, wherein the processor (6) is adapted to receive the temperature value (3) and the vibration related value (5) at a time interval, and based on the values (3, 5) received, the processor (6) is adapted to estimate a time frame (7) for which the cloth is worn.

3. The first system (1) according to claim 2 comprising:
- a memory (8) adapted to receive and store the time frame (7).

4. The first system (1) according to the claim 3, wherein the processor (6) is adapted to receive the stored time frame (7) from the memory (8), and adapted to increase the time frame (7) with a new time frame (7) for which cloth is worn, and send the increased time frame (7) to the memory (8) for storing.

5. A second system (9) for determining optimal time for washing the cloth comprising the first system (1) according to any of the claims 2 to 4, the second system (9) comprising:
- a lookup table (10) comprising a threshold value (11) of the time frame for clothes to be washed after being worn based on category of clothes; and
- a controller (12) adapted to receive the time frame (7), to receive a category (13) of the cloth, and to retrieve the threshold value (11) from the lookup table (10), to compare the time frame (7) and the threshold value (11), and to determine requirement of the cloth to be washed.

6. The second system (9) according to claim 5, wherein the controller (12) is adapted to generate an alarm signal (14) based on the determination of the washing of the cloth, the second system (9) further comprising an alarming device (15) which is adapted to receive the alarm signal (14), and accordingly raise an alarm (16).

7. The second system (9) according to the claim 5, wherein the controller (12) is adapted to generate an alarm signal (14) based on the determination of the washing of the cloth, the second system (9) further comprising a computing device (15) having a processing module adapted to execute a piece of code, and on execution, the processing module is adapted to receive the alarm signal (14), to process the alarm signal (14), and to render an indication (16) for washing of the cloth onto a display of the computing device (15).

8. A method for determining optimal time for washing a cloth comprising:
- placing at least one temperature sensor (2) onto a cloth, and producing a temperature value (3) of an environment where the cloth is placed,
- placing at least one vibration sensor (4) onto a cloth and producing a vibration related value (5) of an environment where the cloth is placed,
- processing the temperature value (3) and the vibration related value (5) using a processor (6), and identifying if the cloth is worn or not.

9. The method according to claim 8 comprising:
- receiving the temperature value (3) and the vibration related value (5) by the processor (6) at a time interval, and based on the values (3, 5) received, estimating a time frame (7) for which the cloth is worn.

10. The method according to claim 9 comprising:
- receiving and storing the time frame (7) in a memory (8);
- receiving the stored time frame (7) from the memory (8) by the processor (6), increasing the time frame (7) with a new time frame (7) for which cloth is worn by the processor (6), and sending the increased time frame (7) to the memory (8) for storing.

11. The method according to claim 10 comprising:
- receiving the time frame (7) by a controller (12) from the memory (8);
- receiving a category (13) of the cloth by the controller (12), and retrieving a threshold value (11) from a lookup table (10) by the controller (12), wherein the lookup table (11) comprising the threshold value (11) for clothes to be worn before washing based on category of clothes;
- comparing the time frame (7) and the threshold value (11) by the controller (12), and determining, requirement of the cloth to be washed.

12. The method according to claim 11 comprising:
- generating an alarm signal (14) by the controller (12) on the determination of the washing of the cloth;
- receiving of the alarm signal (14) by an alarming device (15), and accordingly raise an alarm (16).

13. The method according to the claim 11 comprising:
- generating an alarm signal (14) by the controller (12) on the determination of the washing of the cloth;
- executing a piece of code onto a processing module of a computing device (15);
- on execution, processing the alarm signal (14) by the processing module, and rendering an indication (16) for washing of the cloth onto a display of the computing device (15).
